# DEMANDE DE BREVET EUROPEEN

(11) **EP 1 089 094 A1**
(43) Date de publication de la demande: **04.04.2001**
(21) Numéro de dépôt: 00402487.3
(22) Date de dépôt: 08.09.2000
(51) Int. Cl.: G02B 3/08, F21V 5/02, B29D 11/00

(54) **Procédé de fabrication d'éléments dioptriques et éléments dioptriques pour dispositif d'éclairage.**

(30) Priorité: 30.09.1999 FR 9912216
(71) Demandeur: VALEO VISION, 93012 Bobigny Cédex (FR)
(72) Inventeur: Delattre, Hugo, 93012 Bobigny Cedex (FR)
(74) Mandataire: Hervouet, Sylvie

(57) **Abrégé**

L'invention concerne la fabrication d'éléments dioptriques.

Elle se rapporte à un procédé de fabrication d'éléments dioptriques tels que la lumière d'une source placée d'un premier côté de l'élément dioptrique passe dans une ouverture placée de l'autre côté de l'élément dioptrique. Le procédé comprend une opération de formage d'une matière plastique transparente au cours de laquelle une arête d'échelon de Fresnel d'angle inférieur à 90°, qui ne serait pas entièrement remplie, est remplacée par écrêtement par réalisation d'une surface (26) telle que la lumière traversant cette surface est dirigée de sorte qu'elle ne passe pas par l'ouverture. L'écrêtement est réalisé directement lors du moulage par injection de l'élément.

Application à la fabrication de projecteurs de véhicules automobiles.

## Description

L'invention concerne un procédé de fabrication d'éléments dioptriques pour dispositifs d'éclairage, et des éléments dioptriques pour dispositifs d'éclairage, essentiellement sous forme de lentilles de Fresnel, utiles dans les projecteurs des véhicules automobiles.

On utilise fréquemment des lentilles de Fresnel dans des dispositifs d'éclairage ayant un dispositif optique constitué d'un élément dioptrique ayant le plus souvent au moins une lentille de Fresnel. Il arrive que les lentilles de Fresnel soient intégrées à des blocs de lentilles de Fresnel, et aussi que les lentilles de Fresnel aient des formes composites. Ce type de dispositif d'éclairage ne peut être réalisé que par des opérations de formage, par exemple par injection, et non par un usinage.

On connaît plusieurs procédés de formage de matière plastique transparente qui permettent la réalisation de moulages correspondant parfaitement au moule utilisé. On peut citer les procédés d'injection-compression par fermeture de moule et d'injection-compression par un noyau mobile. Cependant, ces procédés sont en général relativement lents, et les éléments dioptriques obtenus sont relativement coûteux.

Les procédés rapides de formage de matière plastique transparente, tels que l'injection de lentilles de Fresnel, posent des problèmes, car, étant donné la brièveté du cycle de fabrication et les valeurs des paramètres d'injection, il est fréquent que la matière transparente ne remplisse pas entièrement le moule, jusqu'aux extrémités des cavités délimitant les arêtes des échelons des lentilles de Fresnel et dont les angles sont inférieurs à 90°. Bien que cet arrondissement des arêtes ne porte que sur un petit pourcentage de la surface totale de la lentille de Fresnel, la lumière transmise par la partie arrondie des arêtes a des directions très diverses, et cet arrondissement peut constituer un sérieux inconvénient.

Dans le cas de l'utilisation des éléments dioptriques dans des dispositifs d'éclairage par un faisceau "code" des véhicules automobiles, cet inconvénient est particulièrement sérieux dans la mesure où la lumière parasite transmise par la partie arrondie des arêtes et de directions très diverses, peut provoquer un éblouissement. La suppression de l'éblouissement impose le respect de deux conditions : la première est que la quantité de lumière parasite qui est en dehors de la zone correspondant aux conditions nominales doit être inférieure à une valeur déterminée, et la seconde est que le rapport de contraste (rapport de la quantité de lumière comprise dans la zone correspondant aux conditions nominales et de la quantité de lumière parasite qui est en dehors de cette zone) doit avoir une valeur élevée . Dans le cas d'un projecteur d'éclairage à faisceau "code", la quantité de lumière parasite à envisager est celle qui passe au-dessus de la zone correspondant aux conditions nominales. Elle doit être inférieure à 1 lux (première condition) et le rapport de contraste doit être supérieur à 50 (seconde condition).

Une solution évidente pour remédier à cet inconvénient est l'utilisation d'un procédé de formage permettant un moulage convenable des arêtes des échelons des lentilles de Fresnel, tel que les procédés précités d'injection-compression. Cependant, ces procédés sont lents, leur mise en oeuvre est coûteuse, et ils peuvent ne pas permettre les cadences nécessaires dans le cas de fabrications en grande série.

L'invention concerne une autre solution pour remédier à cet inconvénient, qui est la suppression des parties arrondies des arêtes. Cette suppression est effectuée par écrêtement des parties d'arêtes n'ayant pas la forme nominale, et leur remplacement par une surface telle que la lumière passant par ces nouvelles surfaces ne risque pas de provoquer un éblouissement. Ces surfaces sont de préférence plates.

Cet écrêtement peut être effectué soit mécaniquement, par usinage, soit de préférence lors du formage par moulage, puisque la réalisation des surfaces plates permet d'utiliser des angles toujours supérieurs à 90° dont le remplissage est facile, même par une technique d'injection à grande vitesse.

Plus précisément, l'invention concerne un procédé de fabrication d'éléments dioptriques pour dispositif d'éclairage à échelons de Fresnel, tels que la lumière d'une source lumineuse placée d'un premier côté de l'élément dioptrique passe dans une ouverture placée de l'autre côté de l'élément dioptrique, du type qui comprend une opération de formage d'une matière plastique transparente au cours de laquelle une arête au moins d'échelon de Fresnel d'angle inférieur à 90° n'est pas entièrement remplie. Selon l'invention, le procédé comprend en outre l'écrêtement de l'arête qui n'est pas entièrement remplie par réalisation d'une surface d'écrêtement de sorte que la lumière de la source traversant la surface d'écrêtement ait au moins une direction telle qu'elle ne passe pratiquement pas par l'ouverture.

Dans un premier mode d'exécution avantageux, l'écrêtement des arêtes est réalisé par moulage des échelons sous forme tronquée, l'arête étant remplacée par une surface plate telle que les angles des faces de l'échelon et de la surface plate sont supérieurs à 90°, si bien que ces angles peuvent être facilement remplis lors de l'opération de formage de la matière plastique transparente.

Dans un autre mode d'exécution, l'écrêtement est réalisé par usinage de l'arête suivant un plan, après la fabrication d'une arête ayant une extrémité arrondie. La surface plate d'écrêtement peut alors former une surface diffusante.

Dans les deux modes d'exécution, le formage est réalisé de préférence par injection de matière plastique transparente.

L'invention concerne aussi un élément dioptrique pour dispositif d'éclairage à échelons de Fresnel, obtenu par un procédé défini dans les paragraphes précédents et qui constitue une lentille de Fresnel.

Dans un mode de réalisation particulier, l'élément dioptrique constitue une lentille de Fresnel composite ayant au moins une partie à échelons circulaires et une autre partie en forme de réseau à échelons rectilignes.

Dans un autre mode de réalisation particulier, l'élément dioptrique constitue un bloc d'éléments dioptriques constitués de lentilles de Fresnel.

La description qui va suivre, en regard des dessins annexés, donnés à titre d'exemples non limitatifs, fera bien comprendre en quoi consiste l'invention, et comment elle peut être réalisée.

Sur les dessins annexés :
- la figure 1 est une vue partielle schématique en perspective du principe d'un projecteur selon l'invention,
- la figure 2 est une vue en coupe dans un plan vertical du projecteur de la figure 1,
- la figure 3 est une vue de face de l'extrémité du conduit de lumière du projecteur des figures 1 et 2,
- la figure 4 est une vue schématique d'une lame transparente inclinée de sorte que sa face avant de sortie de lumière ne soit plus verticale,
- la figure 5 est une vue schématique en perspective d'une réalisation pratique du projecteur,
- la figure 6 est une vue de dessus en perspective de la platine de montage sur laquelle sont positionnées la pièce de maintien et les lames transparentes superposées du projecteur de la figure 5,
- la figure 7 est une coupe schématique agrandie d'une partie de lentille de Fresnel,
- la figure 8 représente une coupe d'une partie de lentille de Fresnel moulée par injection,
- la figure 9 est une vue agrandie d'une arête d'échelon de lentille de Fresnel,
- la figure 10 est une coupe schématique agrandie d'une partie de lentille de Fresnel ayant un échelon modifié selon l'invention, et
- la figure 11 est une vue en perspective d'un bloc de lentille de Fresnel utile dans un projecteur de véhicule d'automobile.

La description qui suit concerne plus particulièrement un projecteur du type de celui décrit dans le brevet français n° 96 12972 publié sous le n° 2 755 210, et la demande de brevet français n° 97 09210 publiée sous le n° 2 766 257, appartenant à la Demanderesse.

Ce projecteur comprend une source lumineuse réelle, des moyens pour concentrer le rayonnement lumineux issu de cette source sur l'extrémité d'un conduit de lumière comportant une pluralité de lames transparentes juxtaposées selon au moins une direction, chaque lame transparente s'étendant selon l'axe longitudinal du conduit de lumière et comportant, au moins à son extrémité la plus éloignée de la source lumineuse réelle, une facette de réflexion oblique, lesdites facettes constituant autant de sources lumineuses virtuelles et étant disposées de manière à coopérer optiquement avec des éléments dioptriques d'axe parallèle à la direction d'éclairement pour que ceux-ci projettent dans cette direction, des images correspondant aux facettes de façon à constituer un ensemble de faisceaux élémentaires venant se fondre dans un faisceau unique.

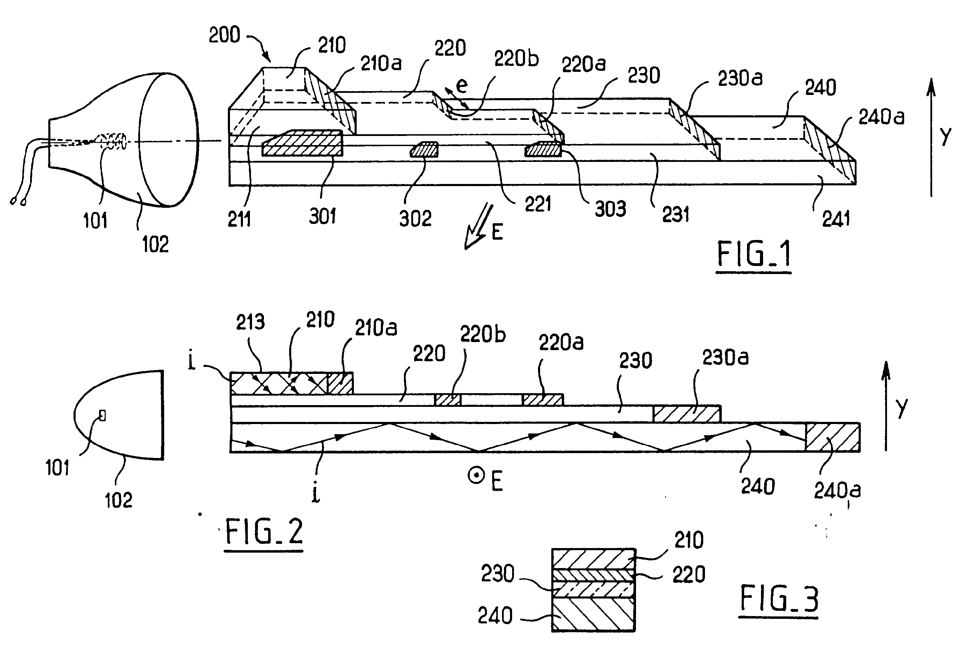

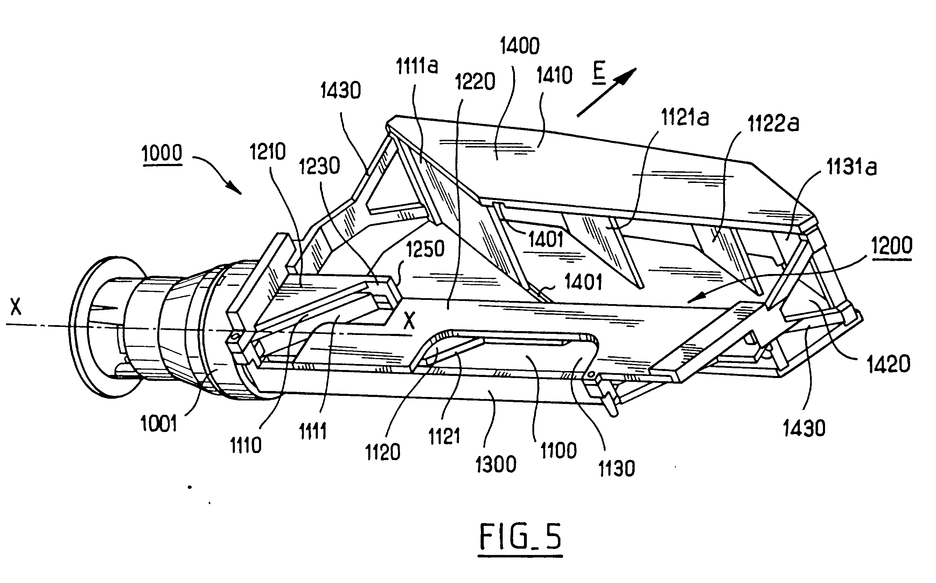

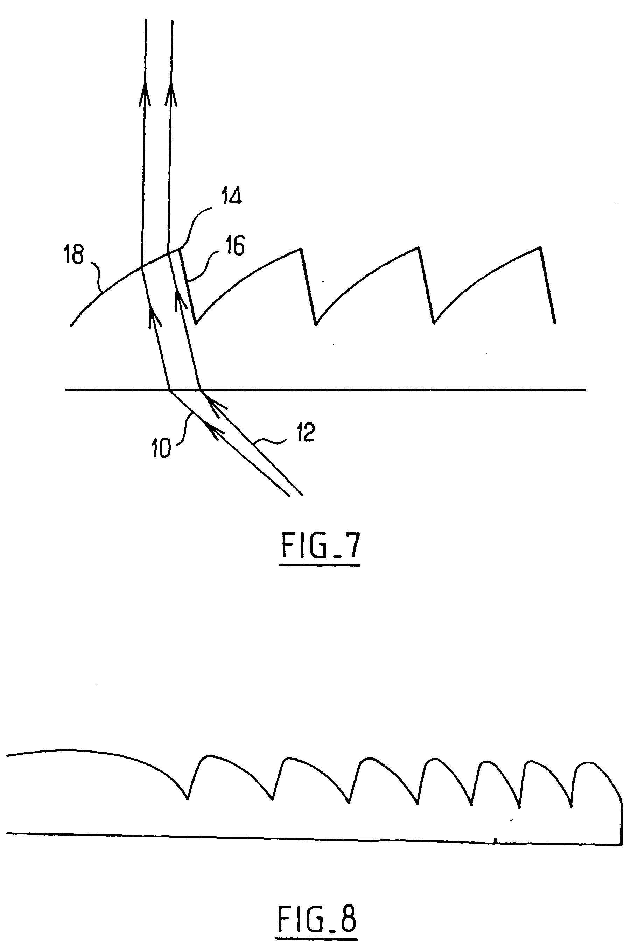

En référence aux figures 1 à 4, on décrit tout d'abord de façon générale le principe du projecteur selon l'invention, puis en référence aux figures 5 et 6, puis une réalisation pratique d'un tel projecteur.

Sur les figures 1 à 3 de la présente demande de brevet, on a représenté un projecteur de véhicule automobile qui comprend une source lumineuse réelle 101 et des moyens 102 pour concentrer le rayonnement lumineux issu de cette source sur l'extrémité d'un conduit de lumière 200.

Les moyens de concentration du rayonnement lumineux émis de la source lumineuse réelle 101, sont constitués essentiellement par un réflecteur ou miroir elliptique 102, la source lumineuse 101 étant constituée par le filament d'une lampe d'automobile, disposée de préférence dans l'axe du réflecteur elliptique 102, à un de ses foyers.

Le flux lumineux issu de la source lumineuse réelle 101 est réfléchi par le réflecteur elliptique 102 selon un ensemble de rayons qui converge vers la zone focale du deuxième foyer dudit réflecteur elliptique.

On pourra prévoir que le réflecteur elliptique 102 soit muni d'une ouverture (ici non représentée) constituant une fenêtre de lumière laissant passer directement les rayons issus de la source lumineuse réelle.

Dans l'axe du réflecteur elliptique 102 s'étend le conduit de lumière 200.

Ce conduit de lumière 200 comporte une pluralité de lames transparentes, ici de différentes longueurs, juxtaposées selon au moins une direction chaque lame transparente s'étendant suivant l'axe longitudinal du conduit de lumière 200 et sensiblement transversalement à la direction d'éclairement E.

Dans cet exemple de réalisation, l'axe longitudinal du conduit de lumière s'étend horizontalement.

Le conduit de lumière 200 comporte ici quatre lames transparentes 210, 220, 230, 240, de différentes longueurs, ici superposées selon la direction X verticale et transversale à l'axe du conduit de lumière et à la direction d'éclairement E.

De façon préférentielle, chaque lame transparente est réalisée en verre.

Chaque lame transparente 210, 220, 230, 240 comporte à son extrémité la plus éloignée de la source lumineuse réelle 101, une facette de réflexion oblique 210a, 220a, 230a, 240a, lesdites facettes étant disposées de manière à coopérer optiquement avec des éléments dioptriques, ici des lentilles non représentées, d'axe parallèle à la direction d'éclairement pour que ces lentilles projettent dans cette direction des images correspondant aux facettes.

En effet, à l'avant du système optique ainsi défini ci-dessus, il est prévu un ensemble d'éléments dioptriques, lentilles convergentes (non représentées sur les figures 1 à 4) dont les axes sont sensiblement parallèles à la direction d'éclairement E. Les lentilles sont disposées en relation de coopération optique avec les facettes 210a, 220a, 220b, 230a, 240a qui sont sensiblement disposées au foyer des lentilles.

Chaque lame transparente comporte une face d'entrée de la lumière s'étendant transversalement à l'axe longitudinal du conduit de lumière. L'ensemble des faces d'entrée de la lumière desdites lames constitue la face d'entrée du conduit de lumière (voir figure 3). Chaque lame transparente 210, 220, 230, 240 comporte en outre une face de sortie de lumière 211, 221, 231, 241 qui selon le mode de réalisation représenté sur les figures 1 et 2 s'étend verticalement et perpendiculairement à la direction d'éclairement repérée par la flèche E.

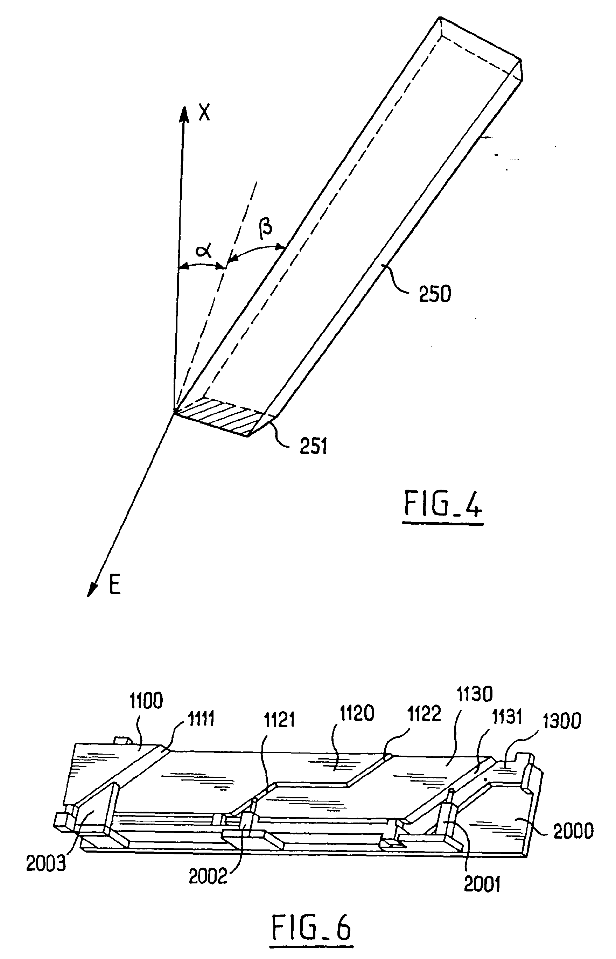

Bien entendu, selon une variante de réalisation représentée plus particulièrement sur la figure 4, on peut prévoir que la face de sortie de la lumière de chaque lame transparente 250 présente une inclinaison αβ, par rapport à l'axe vertical et donc une inclinaison d'un angle β différent de 90° par rapport à la direction d'éclairement E.

En outre, il est possible selon la présente invention, comme le montre les figures 1 et 2, qu'une ou plusieurs lames transparentes comportent d'autres facettes de réflexion 220b, ces facettes 220b étant délimitées par des décrochements de hauteur égale à e, prévus dans la partie arrière de chaque lame, comme cela est le cas en particulier de la lame transparente 22Q

Les facettes de réflexion 210a, 220a, 220b, 230a, 240a du conduit de lumière 200 sont inclinées par rapport à la direction d'éclairement E, leur inclinaison étant comprise entre 35 et 55°, et de préférence égale à 45°.

On se reportera par exemple au mode de réalisation représenté sur la figure 3c du brevet n° 2 514 105 appartenant à la Demanderesse, selon lequel on peut voir que pour un indice de réfraction de 1,7, on atteint un optimum pour un angle de facettes de 53 degrés par rapport à la direction d'éclairement E.

En particulier, selon le mode de réalisation représenté sur la figure 4, la lame transparente présentant une inclinaison différente de 90 degrés par rapport à la direction d'éclairement E, la facette de réflexion 251 associée présente nécessairement une inclinaison par rapport à la verticale différente de 45 degrés pour réfléchir un faisceau lumineux dans la direction d'éclairement.

Avantageusement, pour éviter les pertes de flux lumineux par réfraction, il peut être prévu que les faces internes latérales, avant et arrière de chaque lame transparente soient revêtues d'un revêtement réfléchissant.

En particulier, les interfaces entre les lames transparentes peuvent être aluminées.

Comme cela a déjà été décrit dans le brevet d'invention n° 2 514 105, il peut être prévu une lentille convergente disposée en regard de la fenêtre prévue dans le miroir elliptique 102 en relation de coopération optique avec la source lumineuse réelle 101 qui est sensiblement à son foyer.

De plus, on peut prévoir un miroir semi-réfléchissant disposé au deuxième foyer du miroir elliptique 101 entre la source lumineuse et l'entrée du conduit de lumière 200 formée par la juxtaposition, ici la superposition, des faces d'entrée des lames transparentes le constituant.

Dans ce cas, il est prévu une lentille convergente disposée de la même manière que les lentilles associées aux facettes des lames transparentes, en relation de coopération optique avec le miroir semi-réfléchissant qui est sensiblement disposé au foyer de cette lentille convergente.

Avec la disposition précitée, le flux lumineux issu de la source de lumière réelle 101, réfléchi par le miroir elliptique 102, pénètre dans le conduit de lumière et dans chaque lame transparente 210, 220, 230, 240 le constituant par leur section d'entrée respective et s'y trouve réfléchi, dans un régime de réflexion totale, par les facettes 210a, 220a, 220b, 230a, 240a associées.

Les faisceaux élémentaires réfléchis sont repris par les lentilles (non représentées sur les figures 1 à 4) qui projettent vers l'avant du projecteur les faisceaux lumineux correspondants.

De même, le flux lumineux intercepté par le miroir semi-réfléchissant interposé entre la source lumineuse et l'entrée de conduit de lumière est repris par la lentille associée et le flux lumineux direct passant par la fenêtre du miroir elliptique est repris par la lentille associée.

Avec une telle disposition, il est possible de maîtriser l'éclairement de chaque facette puisque le flux rentrant dans une lame transparente est conduit forcément jusqu'à la facette réfléchissante située à l'extrémité de ladite lame. Chaque lame transparente constitue un conduit de lumière individuel pour une facette du conduit de lumière du projecteur selon l'invention.

On peut doser l'éclairement de chaque facette par le dosage d'éclairement de chaque lame transparente portant ladite facette et former ainsi le faisceau lumineux final prévu.

En projection, chaque facette à réflexion totale 210a, 220a, 220b, 230a, 240a, donne sur un écran, à travers la lentille correspondante une image correspondant au flux d'entrée reçue par la facette et projetée selon la direction E, l'image virtuelle donnée par chaque facette ayant une largeur égale au côté de la face d'entrée de la lame transparente correspondante et une hauteur égale à la hauteur de la lame ou à la hauteur du décrochement E (en ce qui concerne la facette 220b de la lame 220).

Les différents faisceaux élémentaires se fondent en un faisceau d'émission unique et par une disposition judicieuse des axes des lentilles plus ou moins décalés par rapport aux axes des faisceaux élémentaires qu'elles interceptent, on peut réaliser toute disposition d'éclairement, pour un éclairement global pour véhicule automobile.

En particulier, on peut faire en sorte que les images projetées en correspondance avec les différentes facettes soient superposées ou juxtaposées et l'on peut, de même superposer à ces images ou juxtaposer à ces images, celles qui proviennent de la fenêtre du miroir elliptique ou du miroir semi-réfléchissant.

Pour réaliser un faisceau de coupure, il est prévu selon l'invention comme le montre plus particulièrement la figure 1, des caches 301, 302, 303 disposés pur le trajet de certains faisceaux élémentaires d'au moins certaines facettes 210a, 220a, 200b, ici sur la face avant des lames transparentes correspondantes.

Selon une variante non représentée, on peut prévoir que ces caches soient directement posés sur les facettes concernées.

En outre, selon une autre variante, on peut aussi prévoir que certaines facettes présentent le profil correspondant à la forme de la coupure désirée.

Sur la figure 5, on a représenté un projecteur 1000 pour véhicule automobile, du même type que celui décrit précédemment et qu'on ne décrit pas dans le détail.

Il comporte un réflecteur ou miroir elliptique 1001, la source lumineuse étant constituée par le filament d'une lampe d'automobile, disposée de préférence dans l'axe du réflecteur elliptique 1001, à un de ses foyers.

Le conduit de lumière 1100 du projecteur 1000 est pourvu d'une pluralité de facettes de réflexion obliques 1111, 1121, 1122 et 1131 (voir plus particulièrement figure 6) qui coopèrent avec une pluralité d'éléments dioptriques 1111a, 1121a, 1122a, 1131a, ici des lentilles de Fresnel, homologues, d'axes parallèles à la direction d'éclairement E.

Comme on peut le voir plus particulièrement sur la figure 6, le conduit de lumière 1100 est constitué par trois lames transparentes 1110, 1120, 1130, ici de différentes longueurs, superposées selon la direction verticale et transversale à l'axe longitudinal X du conduit de lumière et à la direction d'éclairement E.

Chaque lame transparente est également réalisée en verre.

Chaque lame transparente 1110, 1120, 1130 comporte, à son extrémité la plus éloignée de la source lumineuse réelle, une facette de réflexion oblique 1111, 1122, 1131. La lame transparente intermédiaire comporte également une autre facette de réflexion 1121, délimitée par un décrochement prévu dans la partie arrière de celle-ci.

Ces facettes de réflexion obliques 1111, 1121, 1222, 1131, sont inclinées par rapport à la direction d'éclairement E, leur inclinaison étant comprise entre 35 et 55°, en fonction du positionnement de l'axe longitudinal du conduit de lumière par rapport à la direction d'éclairement.

Chaque lame transparente comporte à son extrémité opposée aux facettes, une face d'entrée de la lumière s'étendant transversalement à l'axe longitudinal du conduit de lumière. L'ensemble des faces d'entrée de la lumière des lames transparentes constitue la face d'entrée du conduit de lumière. Chaque lame transparente comporte en outre une face de sortie de lumière qui est ici une face avant s'étendant sur un côté longitudinal de la lame transparente, verticalement et sensiblement perpendiculairement à la direction d'éclairement E.

Le projecteur 1000 comporte par ailleurs une pièce de référence 1200 pour le montage dudit conduit de lumière 1100.

Cette pièce de référence 1200 comprend une première partie généralement plane horizontale 1210, 1220, qui s'étend suivant l'axe longitudinal X du conduit de lumière 1100 et qui définit un plan de référence horizontal. La pièce de référence 1200 comporte également une deuxième partie généralement plane verticale 1230, qui s'étend perpendiculairement à ladite première partie plane 1210, 1220 et qui définit un plan de référence vertical.

Les lames transparentes 1110, 1120, 1130, juxtaposées du conduit de lumière sont montées en appui contre les première et deuxième parties planes 1210, 1220, 1230 de ladite pièce de référence 1200, dans une position déterminée selon l'axe longitudinal X du conduit de lumière 1100 de sorte que leurs facettes de réflexion obliques coopèrent avec les lentilles de Fresnel associées 1111a, 1121a, 1122a, 1131a pour que celles-ci projettent dans la direction d'éclairement E des images correspondant aux facettes à un endroit déterminé dans le faisceau d'éclairement.

Il convient de préciser que, dans un projecteur à conduit de lumière à lames transparentes, rien n'est prévu pour assurer l'introduction de la lumière à la hauteur voulue sur les faces d'entrée des lames transparentes. Le profil d'éclairement en face d'entrée du conduit de lumière n'est pas uniforme mais présente une forte concentration sur une zone approximativement circulaire de quelques millimètres de diamètre qui doit être centrée à l'interface des lames 1110 et 1120. La dispersion de la lumière sur l'épaisseur des lames, associée aux tolérances de fabrication du verre plat pour la formation des lames, ne permet pas a priori de garantir que cette zone à fort niveau d'éclairement soit correctement positionnée par rapport à cette interface, ce qui pénalise alors la qualité du faisceau lumineux obtenu.

La face supérieure de la lame transparente intermédiaire 120 du conduit de lumière, est calée sur la face interne de la première partie plane horizontale 1220 de la pièce de référence 1200 et la lame transparente supérieure 1110 repose sur la lame intermédiaire 1120.

Ainsi, l'interface de ces deux lames est parfaitement positionnée de manière déterminée par rapport à la pièce de référence 1220 et le montage indexé du réflecteur sur la pièce de référence permet alors de s'affranchir de l'inconvénient précité.

La pièce de référence 1200 est ici une pièce monobloc, mais selon une variante de réalisation non représentée on pourra prévoir que cette pièce de référence soit réalisée en plusieurs parties assemblées entre elles. Sa première partie plane généralement horizontale est une partie supérieure comprenant une partie haute 1210 et une partie basse 1220 horizontales, parallèles, et raccordées par un décrochement 1250.

La surface supérieure du conduit de lumière 1200 s'appuie contre la face interne de cette première partie généralement plane horizontale de la pièce de référence. Plus particulièrement, la face supérieure de la lame transparente la plus courte 1110 s'appuie contre la face interne de la partie haute 1210 de la première partie plane horizontale de la pièce de référence, et la surface supérieure de la partie débordante de la lame transparente intermédiaire 1120 située juste en dessous de la lame transparente la plus courte, s'appuie contre la face interne de la partie plane basse 1220 de la première partie horizontale de la pièce de référence 1200. La partie haute de la première partie plane horizontale de la pièce de référence comporte un bord qui s'étend en biais (par rapport à l'axe longitudinal X) à partir du décrochement 1250 jusqu'à son extrémité située côté réflecteur. Ce bord en biais porte une pige qui s'étend en saillie en direction du conduit de lumière. Cette pige permet le positionnement selon l'axe longitudinal du conduit de lumière, de la lame transparente directement en appui contre la partie plane haute de ladite pièce de référence 1200, ici la lame transparente la plus courte 1110.

La deuxième partie plane verticale 1230 de la pièce de référence 1200 est une partie avant ajourée selon un profil particulier fonction de la longueur et du positionnement des facettes de réflexion obliques des lames transparentes, contre laquelle s'appuient les faces avant de sortie de la lumière des lames transparentes du conduit de lumière.

La pièce de référence 1200 comporte un cadre, ici de forme générale circulaire, pour le montage du réflecteur elliptique 1101 portant la source lumineuse réelle. La longueur de la lame supérieure la plus courte 1110 du conduit de lumière est telle que le deuxième foyer du réflecteur elliptique monté dans le cadre circulaire, est situé à l'extrémité de ladite lame transparente supérieure portant la facette de réflexion oblique 1111, ceci afin d'obtenir sur cette facette de réflexion une concentration de lumière qui donnera au faisceau d'éclairement sa portée.

A l'arrière de la pièce de référence 1200 et à son extrémité la plus éloignée du réflecteur, il est prévu des perçages pour la fixation sur ladite pièce de référence 1200 d'une pièce de maintien 1300.

En effet, le projecteur 1000 comporte ici une pièce de maintien 1300 fixée sur la pièce de référence 1200, en appui contre les faces arrière et inférieure du conduit de lumière 1100 pour maintenir par compression lesdites lames transparentes 1110, 1120, 1130 en appui contre les première et deuxième parties planes 1210, 1220, 1230 de ladite pièce de référence 1200.

Cette pièce de maintien par compression 1300, comporte une base s'étendant selon l'axe longitudinal X du conduit de lumière, dans un plan horizontal parallèle au plan de référence horizontal défini par la première partie plane horizontale de la pièce de référence. Un montant vertical s'étend le long du bord longitudinal arrière de la base horizontale, et est destiné à venir en appui contre la face arrière du conduit de lumière.

Cette pièce de maintien 1300 est fixée à la pièce de référence 1200 par un système de vis introduites dans des perçages en regard, prévus respectivement sur la pièce de maintien et sur la pièce de référence.

Il peut être prévu, dans le module d'éclairage ou projecteur 1000, un élément élastique de pression ici non représenté, tel qu'un ressort à lame, entre le conduit de lumière et la première partie plane de la pièce de référence. Cet élément élastique de pression peut être placé entre la face interne de la partie haute de la première partie plane de la pièce de référence, et la surface supérieure de la lame transparente la plus courte 1110. Il participe au maintien par compression des lames transparentes contre la première partie plane horizontale de la pièce de référence.

Par ailleurs, comme le montre plus particulièrement la figure 5, le projecteur 1000 comporte une pièce avant de montage 1400 qui comporte deux plaques horizontales 1410, 1420 disposées parallèlement en regard l'une de l'autre et solidarisées entre elles par des montants verticaux. Des pattes de montage 1430 s'étendent à partir des montants verticaux de la pièce de montage avant 1400 et sont fixées sur la pièce de référence 1200, à chacune de ses extrémités. Les faces internes en regard des plaques de base 1410, 1420 de la pièce avant de montage 1400 comportent des rainures formant glissières pour le montage des lentilles de Fresnel 1111a, 1121a, 1122a, 1131a. Les rainures prévues pour le montage des lentilles de Fresnel présentent une certaine orientation par rapport à la direction d'éclairement E, et sont positionnées par rapport à la deuxième partie plane verticale de la pièce de référence, de façon que les lentilles de Fresnel montées dans ces rainures, la partie avant de montage étant fixée à la pièce de référence, coopèrent optiquement avec les facettes de réflexion obliques des lames transparentes montées en appui contre la pièce de référence, pour projeter dans la direction d'éclairement une image correspondant auxdites facettes.

Pour la réalisation d'un faisceau de coupure, il peut être prévu dans le projecteur 1000, des caches disposés sur le trajet de certains faisceaux élémentaires d'au moins certaines facettes de réflexion, entre la face avant des lames transparentes considérées et les éléments dioptriques associés, lesdits caches étant solidaires de la pièce avant de montage fixée sur la pièce de référence dans une position déterminée par rapport à celle-ci.

Lesdits caches, ici non représentés, et la pièce avant de montage peuvent former une seule pièce. Il peut être également prévu selon un autre mode de réalisation que ces caches soient rapportés sur ladite pièce avant de montage et fixés à celle-ci par des moyens de fixation.

Il est à noter que la pièce de référence 1200, la pièce de maintien 1300 et la pièce de montage 1400 peuvent être avantageusement réalisées par moulage en aluminium. Les lentilles de Fresnel 1111a, 1121a, 1122a, 1131a peuvent être réalisées en poly-N-méthylméthacrylimide.

La figure 6 montre le principe de montage indexé des lames transparentes 1130, 1120, 1110 du projecteur 1000 représenté sur la figure 1.

Comme le montre plus particulièrement cette figure 6, il est prévu une platine de montage 2000 portant sur un montant latéral des piges 2001, 2002, 2003 pour le positionnement indexé des lames transparentes 1130, 1120, 1110 selon l'axe longitudinal X du conduit de lumière. Dans ce but, lesdites piges sont placées à des endroits déterminés suivant l'axe longitudinal de ladite platine 2000.

On superpose les lames transparentes 1110, 1120, 1130 du conduit de lumière, suivant des longueurs décroissantes, chaque lame transparente 1130, 1120, 1110 étant positionnée de sorte qu'une de ses facettes de réflexion oblique 1131, 1121, 1111 vienne en butée contre la pige de positionnement 2001, 2002, 2003 correspondante de la platine de montage 1200.

En ce qui concerne la lame transparente intermédiaire 1120, c'est la première facette de réflexion oblique 1121 prévue sur sa face arrière qui vient en butée contre la pige correspondante 2002 de la platine de montage 2000.

Puis, on met en place sur la superposition de lames transparentes 1130, 1120, 1110, la pièce de référence (non représentée sur la figure 6) de sorte que d'une part sa première partie plane horizontale couvre la surface supérieure de la lame supérieure la plus courte 1110, ainsi que la surface supérieure de la partie débordante de la lame transparente intermédiaire 1120 positionnée juste en dessous de cette dernière, et d'autre part sa deuxième partie plane verticale vienne contre les faces avant de sortie de la lumière desdites lames transparentes.

On solidarise la pièce de maintien à la pièce de référence à l'aide d'un système à vis de sorte que ladite pièce de maintien maintienne par compression lesdites lames transparentes superposées en appui contre les première et deuxième parties planes de la pièce de référence, puis on retire la platine de montage.

Selon une variante, on peut envisager que la platine de montage 2000 ne comporte pas de pige pour le positionnement de la lame supérieure la plus courte du conduit de lumière. Dans ce cas, cette lame transparente supérieure est simplement positionnée sur la lame intermédiaire et lors de la mise en place de la pièce de référence, la facette d'extrémité de cette lame supérieure courte vient en butée contre la pige de positionnement prévue sur le bord d'extrémité en biais de la partie haute de la première partie plane horizontale de la pièce de référence afin d'assurer l'indexation de ladite lame courte supérieure selon l'axe longitudinal dudit conduit de lumière. Cette pige permet en outre d'éviter un éventuel pivotement de cette lame courte.

Le système de montage du conduit de lumière du projecteur 1000 selon l'invention permet de bien positionner les faces de sortie de lumière des lames transparentes, ainsi que les facettes de réflexion obliques prévues à l'extrémité et éventuellement sur la face arrière desdites lames transparentes, par rapport à deux plans de référence de façon à ce que lesdites facettes coopèrent optiquement avec les lentilles pour que les images desdites facettes projetées par les lentilles dans la direction d'éclairement soient positionnées de façon déterminée pour la formation du faisceau d'éclairement normalisé. Ce positionnement par rapport à deux plans de référence permet de s'affranchir des écarts dus à la tolérance de fabrication des lames individuelles.

En outre, avantageusement, le fait que les lentilles de Fresnel et les caches soient solidaires d'une même pièce de montage positionnée de manière déterminée par rapport à la plaque de référence, permet d'assurer un bon positionnement relatif desdites lentilles et desdits caches et ce quels que soient les phénomènes de dispersion et de dilatation qui peuvent intervenir lors du fonctionnement du module d'éclairage. Les lentilles et les caches sont également bien positionnés par rapport aux faces de sortie des lames transparentes, et auxdites facettes de réflexion obliques. Dans tous les cas, la pièce avant de montage permet de conserver le positionnement relatif des lentilles et des caches, ce qui permet d'obtenir une coupure nette du faisceau d'éclairage.

On considère maintenant un problème posé par les lentilles de Fresnel lorsqu'elles ne sont pas réalisées parfaitement.

La figure 7 est une coupe schématique d'une partie très agrandie de lentille de Fresnel dans laquelle deux rayons lumineux 10, 12 pénètrent par une face d'entrée, tournée vers une source lumineuse, traversent la lentille de Fresnel et sortent sous forme de lumière collimatée dans une direction d'éclairage. Chaque échelon de la lentille de Fresnel a une arête 14 délimitée par un angle inférieur à 90° en général, chaque échelon ayant un côté à génératrice pratiquement rectiligne, parallèle à un rayon lumineux sortant pratiquement par l'arête, et une autre face courbe 18 qui réfracte les rayons.

Dans le cas de la figure 7, tous les rayons parvenant à la face d'entrée sortent sous forme de lumière collimatée dans la direction d'éclairage.

Cependant, lorsque les lentilles de Fresnel sont réalisées par une technique d'injection à grande vitesse, il arrive que la matière transparente ne remplisse pas parfaitement les cavités du moule et que les arêtes des échelons des lentilles de Fresnel obtenues ne soient pas bien vives. La figure 8 représente un tel phénomène. On note que les arêtes de tous les échelons sont arrondies.

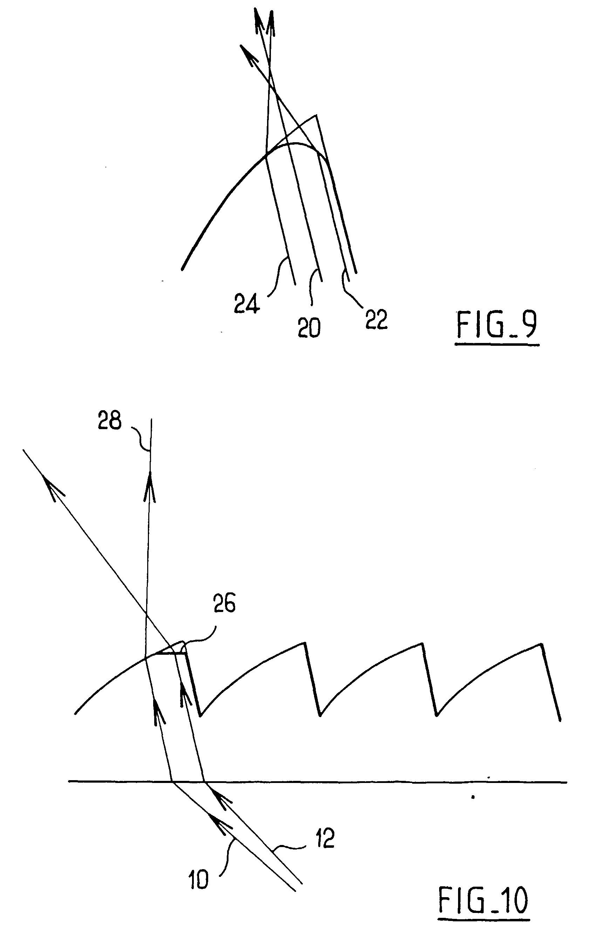

La figure 9 indique que des rayons lumineux 18, 20 et 22, qui sont parallèles dans le corps de la lentille, ont des directions différentes en sortie, seul le faisceau 24 donnant un rayon ayant la direction du faisceau d'éclairage. Ce phénomène peut être très gênant puisqu'une partie de la lumière a des directions voisines de la direction d'éclairage et peut donner un effet d'éblouissement. En effet, l'éblouissement est caractérisé lorsque l'une de deux conditions suivante est remplie : la lumière parasite est supérieure à 1 lux, et le rapport de contraste est inférieur à 50. L'une au moins de ces deux conditions peut être facilement remplie lorsqu'une partie de la lumière, même très petite, a une direction proche de la direction d'éclairage mais non confondue avec celle-ci.

L'invention permet la solution de ce problème, par élimination de la lumière qui pourrait provoquer un éblouissement.

Plus précisément, selon l'invention, comme l'indique l'échelon de gauche de la figure 10, les échelons de la lentille de Fresnel sont moulés avec une arête tronquée de manière qu'elle soit remplacée par au moins une face plate 26, de préférence parallèle à la surface de la face d'entrée. Une telle face plate peut être facilement moulée, car les angles qu'elle forme avec les côtés des échelons sont supérieurs à 90° et ne présentent pas de difficulté de remplissage ; au contraire, les arêtes d'angle inférieur à 90° présentent une telle difficulté. En conséquence, les arêtes délimitant la surface plate 26 sont bien nettes.

Selon l'invention, la surface 26 a une orientation telle que la lumière qui la traverse est déviée largement en dehors de la direction d'éclairage suivie par le rayon 28, c'est-à-dire qu'elle est interceptée avant une ouverture (non représentée) de passage de la lumière d'éclairage.

Dans un mode de réalisation, la surface 26 peut être diffusante, la petite quantité de lumière passant par cette surface 24 étant alors diffusée dans toutes les directions et ayant un très faible effet sur un éblouissement éventuel. Cependant, il est possible que cette surface soit lisse sous la forme directement obtenue par moulage par une surface lisse de moule.

Les surfaces 26 peuvent être réalisées directement dans un moule au moment de l'injection. Il s'agit de l'opération la plus commode étant donné qu'elle ne nécessite aucune modification du procédé de fabrication.

Cependant, il est aussi possible de réaliser les surfaces plates 26 par une opération d'usinage postérieure au moulage des lentilles. Un tel procédé peut par exemple être utilisé lorsqu'un lot de lentilles présente un défaut de moulage des arêtes. Cet usinage est de préférence réalisé de manière que la surface 26 de chaque échelon soit parallèle à la face d'entrée, et que toutes les surfaces 26 des échelons soient dans un même plan. De cette manière, l'usinage des surfaces 26 peut être réalisé simplement.

Selon l'invention, on appelle "surface plate", dans le cas de la définition de la surface 26, toute surface ayant une ou plusieurs génératrices formées de segments de droite. Ainsi, il est aussi possible de réaliser chaque surface 26 d'échelon spécifiquement, par exemple sous une forme tronconique. Une telle forme peut être facilement obtenue par moulage et peut être utile lorsque la lumière doit être fortement déviée, par exemple lorsque l'ouverture de passage de la lumière se trouve très près de l'élément dioptrique.

On a décrit l'invention dans le cas de lentilles de Fresnel. Elle s'applique aussi à des lentilles de Fresnel de type "composite" ou multiple, comportant au moins deux parties ayant des propriétés optiques différentes. De préférence, les deux parties sont formées en une seule pièce par moulage.

Par exemple, les deux parties peuvent être des parties de lentilles de Fresnel de propriétés différentes, par exemple ayant des centres et/ou des distances focales différents. Dans des variantes, les différentes parties peuvent comprendre une partie de lentille de Fresnel et une partie de réseau de prismes. Dans ce cas, les prismes ont une fonction analogue à celle des échelons de la lentille de Fresnel, et une arête de chaque réseau est tronquée par une surface analogue à la surface 26.

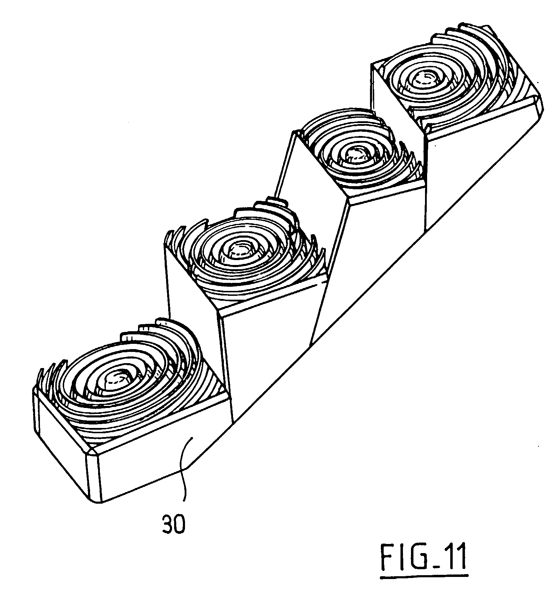

Un élément optique selon l'invention peut être formé, comme indiqué par la référence 30 sur la figure 11, par plusieurs éléments dioptriques constitués de lentilles de Fresnel. Un tel bloc est particulièrement utile dans le projecteur décrit dans le présent mémoire.

La présente invention n'est nullement limitée aux modes de réalisation décrits et représentés, mais l'homme du métier saura y apporter toute variante conforme à son esprit.

## Revendications

1. Procédé de fabrication d'éléments dioptriques pour dispositif d'éclairage à échelons de Fresnel, tels que la lumière d'une source lumineuse placée d'un premier côté de l'élément dioptrique passe dans une ouverture placée de l'autre côté de l'élément dioptrique, du type qui comprend une opération de formage d'une matière plastique transparente au cours de laquelle une arête au moins d'échelon de Fresnel d'angle inférieur à 90° n'est pas entièrement remplie, caractérisé en ce qu'il comprend en outre l'écrêtement de l'arête qui n'est pas entièrement remplie par réalisation d'une surface d'écrêtement (26) telle que la lumière de la source traversant la surface d'écrêtement a au moins une direction telle qu'elle ne passe pratiquement pas par l'ouverture.

2. Procédé selon la revendication 1, caractérisé en ce que l'écrêtement des arêtes est réalisé par moulage des échelons sous forme tronquée, l'arête étant remplacée par une surface plate (26) telle que les angles des faces de l'échelon et de la surface plate sont supérieurs à 90°, si bien que ces angles peuvent être facilement remplis lors de l'opération de formage de la matière plastique transparente.

3. Procédé selon la revendication 1, caractérisé en ce que l'écrêtement est réalisé par usinage de l'arête suivant un plan, après la fabrication d'une arête ayant une extrémité arrondie.

4. Procédé selon la revendication 3, caractérisé en ce que la surface plate d'écrêtement est une surface diffusante.

5. Procédé selon l'une quelconque des revendications précédentes, caractérisé en ce que le formage est réalisé par injection de matière plastique transparente.

6. Elément dioptrique pour dispositif d'éclairage à échelons de Fresnel obtenu par un procédé selon l'une quelconque des revendications précédentes, caractérisé en ce qu'il constitue une lentille de Fresnel.

7. Elément dioptrique selon la revendication 6, caractérisé en ce qu'il constitue une lentille de Fresnel composite ayant au moins une partie à échelons circulaires et une autre partie en forme de réseau à échelons rectilignes.

8. Elément dioptrique selon la revendication 6, caractérisé en ce qu'il constitue un bloc (30) d'éléments dioptriques constitués de lentilles de Fresnel.
